Europäisches Patentamt

European Patent Office

Office européen des brevets

(19)

(11) Numéro de publication : **0 489 150 B1**

(12) **FASCICULE DE BREVET EUROPEEN**

(45) Date de publication du fascicule du brevet :
**16.02.94 Bulletin 94/07**

(51) Int. Cl.$^5$ : **F24F 11/00, E21F 1/00**

(21) Numéro de dépôt : **91913373.6**

(22) Date de dépôt : **02.07.91**

(86) Numéro de dépôt international :
**PCT/FR91/00532**

(87) Numéro de publication internationale :
**WO 92/00492 09.01.92 Gazette 92/02**

(54) PROCEDE ET INSTALLATION DE REGLAGE DU DEBIT D'AIR DANS UN RESEAU DE CONDUITES.

(30) Priorité : **02.07.90 FR 9008328**

(43) Date de publication de la demande :
**10.06.92 Bulletin 92/24**

(45) Mention de la délivrance du brevet :
**16.02.94 Bulletin 94/07**

(84) Etats contractants désignés :
**AT BE CH DE DK ES FR GB GR IT LI LU NL SE**

(56) Documents cités :
**DE-A- 3 321 555**
**DE-A- 3 805 152**

(73) Titulaire : **COMPAGNIE GENERALE DES MATIERES NUCLEAIRES (COGEMA)**
**2, rue Paul Dautier B.P. 4**
**F-78141 Vélizy-Villacoublay (FR)**

(72) Inventeur : **Pradelle, Bernard Pierre**
**2, Rue Max-Linder, Landouge**
**F-87100 Limoges (FR)**

(74) Mandataire : **Fort, Jacques**
**CABINET PLASSERAUD 84, rue d'Amsterdam**
**F-75009 Paris (FR)**

EP 0 489 150 B1

Jouve, 18, rue Saint-Denis, 75001 PARIS

## Description

L'invention concerne le réglage du débit d'air dans un réseau de conduites et elle est notamment applicable au réglage du débit d'air d'aérage dans une mine ou dans un ouvrage souterrain ou industriel.

Le débit d'air qui parcourt le réseau est en général maintenu par un ou plusieurs ventilateurs. Le débit d'air doit être suffisant pour assurer le confort et la sécurité des ouvriers : il doit notamment être suffisant pour maintenir des qualités physiques et chimiques acceptables de l'air dans le réseau, notamment en diluant les gaz nocifs, en évacuant la poussière et en limitant l'élévation de température. Dans la pratique, le débit d'air de consigne à maintenir varie beaucoup avec l'activité dans l'ouvrage et doit donc être réglable par commande des ventilateurs.

On peut régler le débit d'air maintenu par un ventilateur de plusieurs façons. On peut prévoir des ventilateurs à pales à pas variables mais cette solution exige un système mécanique onéreux et conduit à des arrêts à chaque changement de débit. Elle ne convient pas lorsque le débit de consigne doit être modifié de façon continue ou fréquemment. L'invention utilise le réglage par commande de la vitesse de rotation du ventilateur, qui est plus souple et peut être aisément obtenu en utilisant un ventilateur à moteur asynchrone alimenté par un convertisseur à fréquence variable autorisant une plage de variation étendue.

L'invention vise notamment à fournir un procédé et un dispositif de réglage de débit d'air par commande de la fréquence alimentation du moteur d'un ventilateur ou de chaque ventilateur d'aérage d'un réseau de canalisations de façon au moins semi-automatique et en optimisant les conditions de fonctionnement, en cas d'emploi de plusieurs ventilateurs.

Dans ce but l'invention propose notamment un procédé de réglage de débit d'air dans un réseau de canalisations (tel qu'une mine, un ouvrage souterrain ou industriel) par commande de la vitesse d'au moins un ventilateur rotatif de circulation d'air muni d'un moteur électrique dont la vitesse est fonction de la fréquence fournie par un convertisseur à fréquence réglable, pilotable par une unité centrale de calcul, caractérisé en ce que :

(a) on mémorise, dans l'unité centrale de calcul, au moins une courbe caractéristique pression totale-débit pour au moins une vitesse prédéterminée,

(b) on mesure au moins la pression totale fournie par le ventilateur et la vitesse de circulation pour un régime établi de fonctionnement et on en déduit, par calcul à l'aide de l'unité centrale, la résistance de la galerie et le débit à un instant courant,

(c) on introduit dans l'unité centrale de calcul le débit de consigne à fournir par le ventilateur et on en déduit, par calcul à l'aide de l'unité centrale, la pression totale théorique à fournir par le ventilateur,

(d) on détermine, par interpolation entre les courbes caractéristiques mémorisées et déduites par le calcul, la vitesse à donner au ventilateur et on règle le convertisseur à la fréquence correspondante à l'aide de l'unité centrale de calcul,

(e) on répète les mesures de pression totale et de vitesse pour déterminer le débit réel obtenu et on corrige éventuellement la fréquence du convertisseur pour obtenir le débit de consigne requis.

La séquence ci-dessus définie est effectuée sous la commande de l'unité centrale de calcul qui, en particulier, saisit les informations nécessaires (pression totale et vitesse) sous forme numérique et commande le convertisseur.

L'unité centrale de calcul peut être constituée par un ordinateur personnel et peut être complétée par un micro-automate de commande locale de chaque ventilateur. Le débit de consigne nécessaire peut être introduit manuellement ou être commandé par d'autres paramètres, par exemple la teneur de polluants ou la température dans le réseau de canalisations ou en certains points de ce réseau.

L'invention propose également une installation de réglage du débit d'air dans un réseau de conduites, comprenant :

- au moins un ventilateur de circulation d'air muni d'un moteur électrique dont la vitesse est fonction de la fréquence du courant électrique qui lui est fourni ;
- un convertisseur fournissant le courant électrique, à fréquence de sortie réglable par un signal de commande appliqué au convertisseur ; et
- des moyens de mesure de la pression totale fournie par le ventilateur et du débit, et éventuellement de la puissance électrique absorbée par le moteur du ventilateur,

caractérisée en ce qu'elle comprend également une unité centrale de calcul ayant :

- un processeur ;
- une mémoire prévue pour mémoriser sous forme numérique au moins une courbe caractéristique pression totale-débit, et éventuellement une courbe caractéristique puissance-débit, du ventilateur, à au moins une vitesse prédéterminée ;
- des moyens de visualisation desdites courbes ; et
- des moyens de saisie de données, permettant d'affecter une valeur de consigne au débit à faire passer dans le réseau ;

l'unité centrale de calcul étant prévue pour calculer la résistance de la galerie et le débit qui la parcourt à un instant déterminé, à partir des signaux fournis par les moyens de mesure, et étant prévue pour calculer, à partir des résultats du calcul précédent et de la valeur de consigne du débit, par interpolation, la vitesse à donner au ventilateur et pour commander la fréquence de sortie du convertisseur de façon à atteindre cette vitesse.

Des moyens de visualisation, tels qu'un moniteur, peuvent être utilisés pour faire apparaître également la puissance consommée en fonction du débit et permettre de vérifier que le ventilateur fonctionne dans une zone de rendement acceptable.

L'invention sera mieux comprise à la lecture de la description qui suit d'un mode particulier de réalisation, donné à titre d'exemple non limitatif. La description se réfère aux dessins qui l'accompagnent, dans lesquels :

- la Figure 1 est un synoptique général très simplifié d'une installation à un seul ventilateur ;
- la Figure 2 est un diagramme montrant un réseau de caractéristiques pression totale $H_t$-débit Q d'un ventilateur qu'on peut considérer comme représentatif, pour plusieurs vitesses $n_0$, $n_1$, $n_2$ ($n_0$ étant la vitesse nominale) ;
- la Figure 3, similaire à la Figure 2, montre le gain de débit obtenu par jumelage en parallèle de deux ventilateurs ayant les mêmes caractéristiques ;
- la Figure 4 est un schéma destiné à faire apparaitre un risque de déséquilibre dans les débits, à proximité de la zone de pompage, lorsque deux ventilateurs sont placés en parallèle ;
- la Figure 5, similaire aux Figures 2 et 3, montre la caractéristique résultant du jumelage en parallèle de deux ventilateurs ayant des caractéristiques différentes ;
- la Figure 6 est un schéma de principe d'une installation à plusieurs ventilateurs.

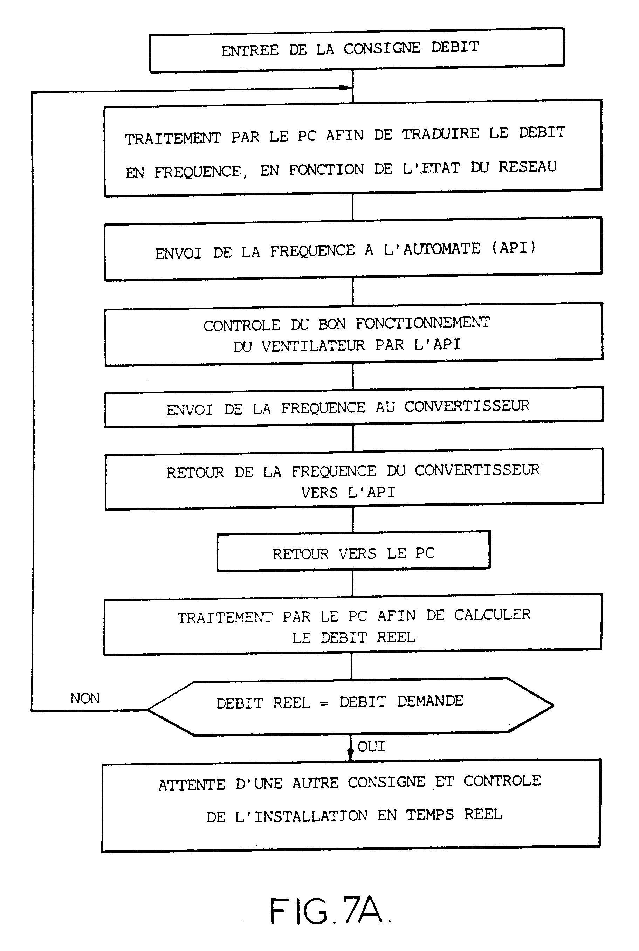

- les Figures 7A-7B sont des synoptiques de fonctionnement.

On considèrera tout d'abord le cas de l'aérage d'un réseau de conduites, dont seul l'échappement à l'air libre 8 est représenté, à l'aide d'un seul ventilateur 10 placé à l'extrémité d'un puits d'extraction et rejetant l'air à l'atmosphère. Pour un tel ventilateur aspirant 10, la charge statique H mesurée à l'amont du ventilateur est égale à la pression totale $H_t$ fournie par le ventilateur, si la section d'entrée est égale à la section de sortie.

Si le ventilateur était monté en accélérateur, en un point intermédiaire de la conduite, ce serait la différence des charges statique ou totale entre l'amont et l'aval du ventilateur qui représenterait la pression totale $H_t$.

La charge statique H est mesurable par des moyens tels qu'un capteur 12 ayant une prise d'air orientée orthogonalement au sens de circulation de l'air et munie d'un transducteur. Dans le cas, qui sera seul considéré maintenant, d'un réglage à l'aide d'une unité centrale de calcul numérique 14, le capteur 12 doit être muni d'un convertisseur analogique-numérique de sortie ou l'organe de calcul doit être muni d'un convertisseur analogique-numérique d'entrée mettant les données fournies par le capteur 12 sous forme numérique.

Le ventilateur 10 est entrainé par un moteur asynchrone 16 alimenté par un convertisseur de fréquence 18 dont la fréquence de sortie est commandée par l'unité centrale de calcul 14 qui, dans le cas illustré, comporte un calculateur 20 et un micro-automate 21. Dans le cas d'une installation à plusieurs ventilateurs, chacun d'eux peut être muni d'un automate 21, assurant une régulation séparée, à partir de données fournies par un calculateur central unique 20.

Le moteur 16 est muni de capteurs 22 fournissant la vitesse n et la puissance électrique absorbée $P_e$ au calculateur 20, soit sous forme numérique, soit sous forme de signaux pouvant être mis sous forme numérique.

Des moyens sont également prévus pour fournir une information représentative du débit d'air Q dans le puits d'extraction 8. On ne peut en effet mesurer directement ce débit. L'information représentative peut être la vitesse moyenne V, mesurée à l'aide d'un anémomètre à un emplacement où la section de passage est connue et où les vitesses ont une répartition homogène ou bien déterminée. Cette solution est cependant peu satisfaisante, car les anémomètres exigent un entretien coûteux. En général, la vitesse V et donc le débit sont calculés à partir de la charge dynamique $H_d$, mesurée à l'aide d'un capteur à sonde 24. La relation entre la vitesse V et la charge dynamique $H_d$ est :

$$V = (2 H_d/w)^{1/2}$$

où w est le poids spécifique de l'air.

La charge dynamique doit être mesurée à un emplacement où la répartition des vitesses est connue et reproductible, afin que la mesure de débit soit fiable. Si nécessaire, plusieurs sondes peuvent être placées dans une même section.

La sonde de mesure de charge peut être un tube de Pitot double classique, fournissant la charge dynamique par différence entre la charge totale et la charge statique.

Le réseau de canalisations et les composants de l'installation, en particulier le ventilateur 10 et son moteur d'entraînement 16, présentent une constante de temps de réaction qui doit être prise en compte. De plus, des fluctuations sont inévitables. L'unité centrale de calcul 14 est en conséquence programmée pour prendre en compte les constantes de temps et éventuellement effectuer des moyennes sur des valeurs successives des paramètres d'entrée, obtenus par échantillonnage temporel.

Avant de définir le procédé mis en oeuvre par l'invention, il faut rappeler quelques données concernant les ventilateurs rotatifs et l'écoulement dans les conduites et définir la terminologie utilisée.

La puissance aéraulique Pa nécessaire pour établir un débit d'air Q dans un circuit peut s'écrire :

$$Pa = \Delta H * Q^2 \quad (1)$$

où

$\Delta H$ est la perte de charge du circuit (égale à la différence des charges statiques entre l'entrée et la sortie lorsqu'elles sont de sections égales et donc correspondent à une même vitesse de circulation d'air),

Q est le débit.

La résistance R du circuit est reliée à la perte de charge $\Delta H$ et au débit par la relation :

$$R = H/Q^2. \quad (2)$$

Les propriétés d'un ventilateur peuvent être définies par un réseau de courbes caractéristiques. Le constructeur fournit ces courbes pour des conditions d'étalonnage à une vitesse prédéterminée, généralement la vitesse nominale $n_0$, dans les conditions normales de température et de pression. Ces courbes expriment la relation entre la charge totale $H_t$, le débit Q, la puissance Pa et le rendement du ventilateur ; dans la plupart des cas, elles donnent aussi un autre paramètre de fonctionnement en fonction du débit Q.

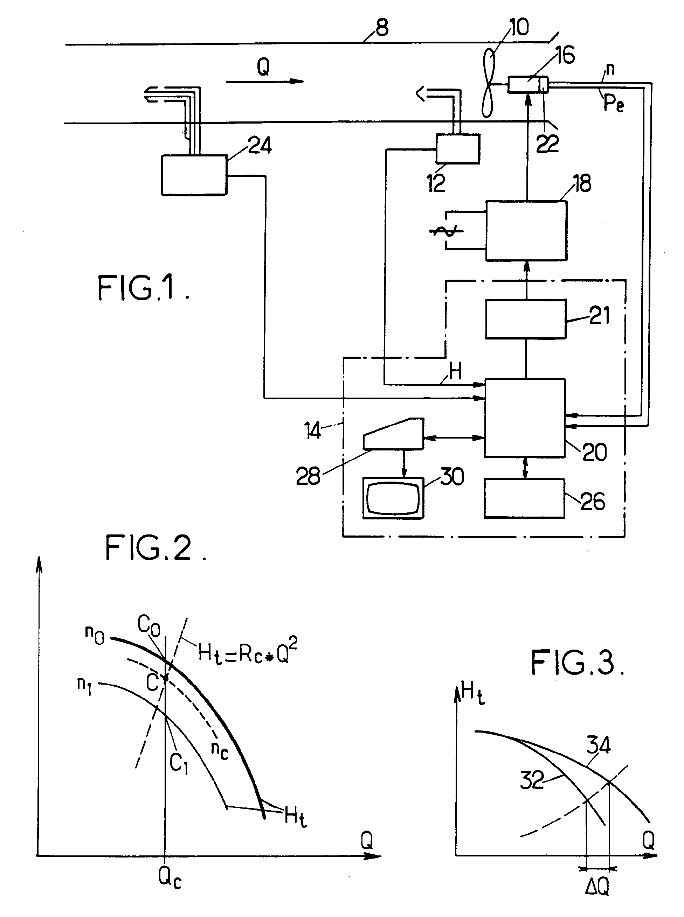

Pour la mise en oeuvre de l'invention, les courbes les plus importantes sont celles qui expriment la charge totale $H_t$ en fonction du débit Q. La Figure 2 montre, en traits épais, la courbe fournie par le constructeur et donnant la charge $H_t$ en fonction du débit Q pour la vitesse nominale $n_0$. Elle peut être mémorisée dans une mémoire 26 sous forme échantillonnée.

Dans une plage limitée de vitesse, pour laquelle le rendement du ventilateur reste satisfaisant, la pression totale $H_t$ varie proportionnellement au carré de la vitesse $\underline{n}$, suivant la relation :

$$H_t = k_1 * n^2$$

où $k_1$ est une constante.

Le débit Q et la puissance aéraulique Pa varient elles-mêmes suivant les formules

$$Q = k_2 * n$$
$$Pa = k_3 * n^3$$

où $k_2$ et $k_3$ sont des constantes.

On voit qu'on peut déduire, d'une caractéristique nominale $H_t(Q)$ à vitesse $n_0$, la caractéristique à vitesse $n_1$. La Figure 2 montre par exemple, en trait fin, $H_t(Q)$ pour la vitesse $n_1$, inférieure à $n_0$, obtenue par simple homothétie :

$$H_1 = (n_1/n_0)^2 H_0$$

à débit Q égal.

Le procédé suivant l'invention est mis en oeuvre automatiquement par l'unité centrale de calcul 14 lorsqu'elle fonctionne en régime de commande. Le débit $Q_c$ de consigne à fournir est entré dans le calculateur 20, par exemple à l'aide d'un clavier 28. A partir de là, le calculateur détermine la vitesse de consigne appropriée $n_c$ et commande le convertisseur 18 en conséquence.

Dans un mode particulier de mise en oeuvre, le calculateur détermine et mémorise préalablement un réseau de courbes $H_t(Q)$ à partir des données fournies par le constructeur et notamment de $H_t$ à $n_0$ donné. Puis, lors de la commande proprement dite :

(a) à partir de la mesure de la vitesse V, il calcule le débit Q à l'instant courant de mesure; puis, à partir de la pression totale $H_t$ fournie par le ventilateur, représentative de la perte de charge et du débit Q, il calcule la résistance $R_c$ du réseau ;

(b) il calcule la valeur de la pression totale $H_t$ théorique à fournir par le ventilateur 10 pour obtenir le débit Qc choisi ;

(c) il déduit de $H_t$, par interpolation entre les courbes caractéristiques mémorisées (aux vitesses $n_0$ et $n_1$ sur la figure 2), la vitesse de consigne $n_c$ à donner au ventilateur et il règle le convertisseur 18 à la fréquence correspondante.

Plus précisément, la résistance $R_c$ est calculée (opération (a)) par la formule (2) ci-dessus pour le point de fonctionnement courant : la résistance $R_c$ permet à son tour de calculer la caractéristique pression $H_t$-débit Q du réseau de canalisations pour un état déterminé du réseau (opération (b)) : cette caractéristique est indiquée en tirets sur la Figure 2 pour un cas particulier.

Le débit de consigne $Q_c$ correspond alors au point C sur le diagramme de la Figure 2.

La vitesse $n_c$ pour laquelle la caractéristique pression totale-débit du ventilateur passe par C est déterminée (opération (c)) et le calculateur commande la fréquence du convertisseur en conséquence, en tenant compte du glissement du moteur. Le premier calcul est une simple interpolation entre les points C0 et C1 de la Figure 2. Ces points C0 et C1 peuvent eux-mêmes être déterminés par interpolation polynominale entre les échantillons mémorisés définissant la caractéristique pression $H_t$-débit Q aux vitesses $n_0$ et $n_1$.

La fréquence $f$ correspondant à la vitesse $n_c$ est réglée par le calculateur 20, par l'intermédiaire du micro-automate 21. Dans la pratique, le débit obtenu ne sera souvent pas exactement le débit de consigne $Q_c$ recherché. Le calculateur 20 détermine alors, à partir des données fournies par les capteurs 12 et 24, le débit réel et la pression totale réelle. Il peut à partir de là, par interpolation, réajuster la fréquence jusqu'à obtenir, par approximations successives, le débit souhaité avec la précision nécessaire à l'avance.

La caractéristique du réseau de canalisations peut varier en fonction du temps, par exemple par suite de la fermeture de certaines galeries. L'unité centrale de calcul 14 peut être programmée pour ré-effectuer le calcul complet à intervalles réguliers, ou pour suivre l'évolution de la caractéristique du réseau par des ajustements successifs ; elle peut également être prévue pour intervenir lorsque l'écart entre débit réel et débit de consigne dépasse un seuil prédéterminé.

Il est préférable d'utiliser, comme grandeurs d'entrée dans le calcul, des moyennes obtenues à partir de plusieurs échantillons successifs, étant donné les variations de vitesse du ventilateur et les fluctuations inévitables du débit d'air.

L'unité centrale de calcul 14 peut être prévue pour commander la fréquence du convertisseur 18 en tenant compte de la puissance électrique consommée Pe, qui est reliée au glissement du moteur 22.

L'unité centrale de calcul est avantageusement complétée par un organe de visualisation, tel qu'un moniteur de télévision 30, permettant d'afficher les paramètres principaux de fonctionnement et les caractéristiques effectives du système (montrées en Figure 2), donc de vérifier, d'une part, que les conditions de consigne sont bien remplies, d'autre part, que le ventilateur fonctionne dans des zones de ces caractéristiques où le rendement est acceptable.

L'invention est également utilisable pour commander plusieurs ventilateurs équipant un même réseau de canalisations, par exemple un même quartier de mine. Ces ventilateurs sont généralement placés en série ou en parallèle et le mode de conduite change suivant le cas.

Lorsque les deux ventilateurs sont montés en série, les pressions totales qu'ils fournissent s'ajoutent, mais le débit reste limité à la valeur la plus faible parmi celles que peuvent donner les deux ventilateurs. Un tel jumelage en série n'a d'intérêt que pour les réseaux présentant une résistance élevée.

Lorsque deux ventilateurs sont montés en parallèle, les débits fournis par les ventilateurs s'ajoutent mais la pression totale est inchangée. Un tel jumelage en parallèle n'est intéressant que dans le cas de réseaux exigeant un débit élevé ou très variable (les faibles débits pouvant être obtenus en arrêtant un ventilateur), dont la résistance est relativement faible. La Figure 3 montre, à titre d'exemple, le gain $\Delta Q$ de débit que l'on peut obtenir en mettant en parallèle deux ventilateurs ayant la même caractéristique pression-débit 32. La courbe 34 montre la caractéristique équivalente à l'ensemble des deux ventilateurs.

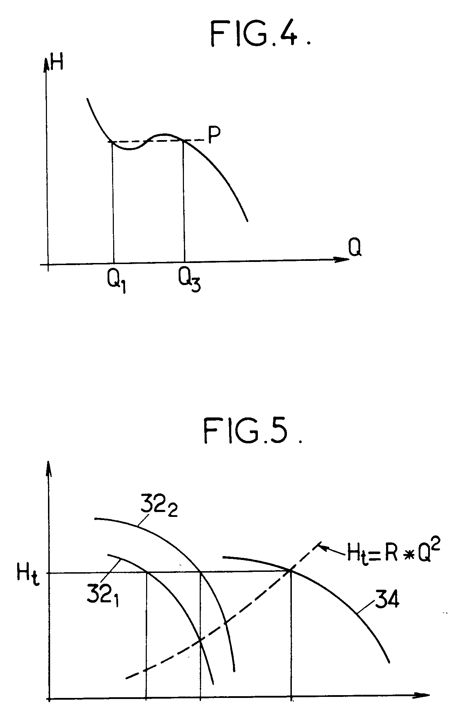

Lorsque plusieurs ventilateurs sont placés en parallèle et ont des caractéristiques identiques, la commande ne se différencie pas fondamentalement de celle déjà décrite, si ce n'est qu'il faut vérifier que le point de fonctionnement de chacun d'eux est tel que, pour la pression de fonctionnement requise, il n'existe qu'un seul débit possible. Dans une bande de débits comprise entre les deux points à tangente horizontale délimitant la zone de pompage, il existe trois possibilités d'obtention d'un débit déterminé. Dans le cas de deux ventilateurs en parallèle, la Figure 4 montre qu'un premier ventilateur peut se placer sur le point correspondant au débit Q3, tandis que l'autre ventilateur, décrivant sa courbe caractéristique à partir d'un débit nul, s'arrête au premier point correspondant à la pression fournie par l'autre ventilateur, c'est-à-dire à Q1.

Un mode simple de commande consiste alors à donner aux deux ventilateurs la même vitesse. Une solution plus complexe et plus avantageuse consiste à faire apparaitre, sur les moyens de visualisation 30, l'état actuel de fonctionnement du système, sous forme des courbes caractéristiques courantes de tous les ventilateurs identiques en parallèle, susceptibles de fonctionner à des vitesses différentes, pour en déduire une courbe caractéristique moyenne. Le débit total et la résistance équivalente du système étant alors connus, on peut déterminer si un changement de débit est nécessaire. Si le débit courant est différent du débit de consigne, une méthode simple consiste à répartir les variations de débit de façon uniforme entre tous les ventilateurs : cette répartition peut être effectuée par l'unité centrale de calcul.

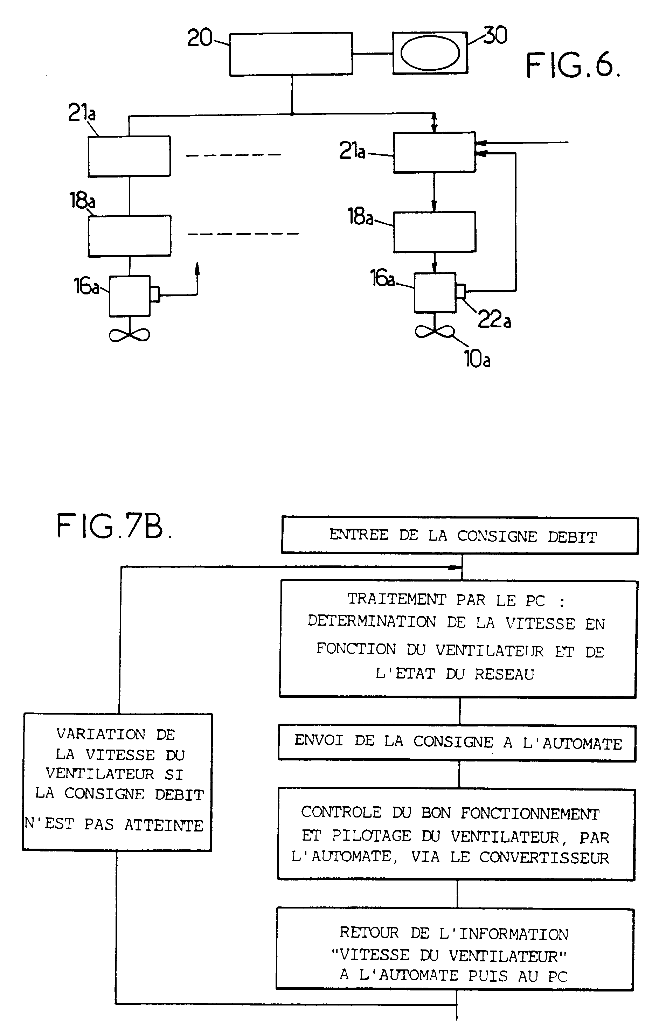

La situation est un peu plus complexe dans le cas de ventilateurs ayant des courbes caractéristiques différentes, telles que celles données en $32_1$ et $32_2$ sur la Figure 5. On peut néanmoins déterminer les différentes vitesses à leur donner en traçant les caractéristiques passant toutes par le point de fonctionnement choisi. Les deux ventilateurs fonctionnent alors de façon à fournir la même pression totale $H_t$, mais fournissent des débits différents. Il peut être alors utile de mémoriser, dans l'unité centrale de calcul 14, des zones de risque de pompage sous forme de plages de fonctionnement exclues.

Dans le cas d'un réseau de conduite ayant plusieurs ventilateurs $10_a$ placés dans des conduites différentes, il peut être avantageux de fractionner les fonctions de mesure, de commande et de calcul entre un calculateur unique 20 et des automates programmables $21_a$ affectés chacun à un ventilateur, comme le montre la figure 6.

Le calculateur peut notamment être un calculateur personnel équipé d'une carte de communication avec les automates programmables $21_a$ par l'intermédiaire d'un bus.

Les automates $21_a$ peuvent être du type SIEMENS 100 U ayant une unité centrale CPU 103, une mémoire morte programmable de 2 koctets, une carte de communication séries RS 485, une carte de sortie analogique permettant de commander le convertisseur de fréquence associé sous une tension de + à - 10 volts et des cartes d'entrées analogiques.

L'automate comporte des convertisseurs analogiques-numériques requis pour effectuer les conversions entre données numériques traitées par le calculateur et données physiques.

Le calculateur assure alors les fonctions de commande et de contrôle du fonctionnement des ventilateurs. Chaque automate $21_a$ a plusieurs fonctions :

- détermine les priorités entre paramètres de commande : il peut par exemple être muni, en plus de capteurs $22_a$ de vitesse et de puissance électriques, d'entrées pour recevoir des signaux de capteurs supplémentaires, donnant par exemple la teneur en $CO_2$ dans la conduite, la température dans la conduite, la température du moteur $16_a$, etc et déterminer, par comparaison avec des valeurs mémorisées, quel est le paramètre qui doit être prépondérant dans la commande.

Par exemple, immédiatement après un tir dans une galerie, la teneur en $CO_2$ peut s'accroître de façon telle que la priorité consiste à la réduire, même si temporairement la puissance $P_e$ doit dépasser la puissance tolérable en régime permanent pour le moteur $16_a$.

En d'autres termes, l'automate peut envoyer au calculateur 20 le paramètre le plus significatif de commande et, sur demande du calculateur, des données représentant l'état complet de l'installation dans la zone concernée par un ventilateur particulier.

L'automate peut également être prévu pour vérifier, avant de commander le convertisseur $18_a$ pour amener le ventilateur à la vitesse de consigne fournie par le calculateur, que le respect de cette consigne ne conduit pas à sortir des conditions de sécurité.

L'installation montrée en figure 6 permet également de faire fonctionner chaque ventilateur en mode "local", en y enregistrant des valeurs de consignes qui peuvent varier au cours du temps soit par une commande de l'utilisateur, soit en cas de défaut de transmission entre le calculateur 20 et l'automate. Il est même possible de commander manuellement la vitesse du ventilateur, l'automate $21_a$ n'ayant alors plus qu'à transmettre au calculateur les informations relatives au fonctionnement, pour contrôle par le calculateur.

Une telle disposition permet au calculateur, dans une première étape, de mémoriser les caractéristiques de chaque ventilateur dans son environnement, avec des mises à jour périodiques ; le calculateur peut également afficher, sur un moniteur de télévision associé, les caractéristiques du fonctionnement de chacun des ventilateurs et son évolution dans le temps.

**Revendications**

1. Procédé de réglage de débit d'air dans un réseau de conduites, tel qu'une mine, un ouvrage souterrain ou industriel, par commande de la vitesse d'au moins un ventilateur rotatif (10) de circulation d'air muni d'un moteur électrique (16) dont la vitesse est fonction de la fréquence fournie par un convertisseur à fréquence réglable pilotable par une unité centrale de calcul, caractérisé en ce que :

(a) on mémorise, dans l'unité centrale de calcul (14), au moins une courbe caractéristique pression totale-débit pour au moins une vitesse prédéterminée,

(b) on mesure au moins la pression totale ($H_t$) fournie par le ventilateur et la vitesse de circulation pour un régime établi de fonctionnement et on en déduit, par calcul à l'aide de l'unité centrale, le débit à un instant courant et la résistance du réseau,

(c) on introduit dans l'organe de calcul le débit de consigne à fournir par le ventilateur (10) et on en déduit, par calcul à l'aide de l'unité centrale (14), la pression totale théorique à fournir par le ventilateur (10),

(d) on détermine, par interpolation entre les courbes caractéristiques mémorisées et déduites par le calcul, la vitesse à donner au ventilateur et on règle le convertisseur (18) à la fréquence correspondante à l'aide de l'unité centrale de calcul,

(e) on répète les mesures de pression totale et de vitesse pour déterminer le débit réel obtenu et on corrige éventuellement la fréquence de réglage du convertisseur pour obtenir le débit de consigne requis.

2. Installation de réglage du débit d'air dans un réseau de canalisations, comprenant :

- au moins un ventilateur (10) de circulation d'air muni d'un moteur électrique (16) dont la vitesse est fonction de la fréquence du courant électrique qui lui est fourni ;

- un convertisseur (18) fournissant le courant, à fréquence de sortie réglable par un signal de commande appliqué au convertisseur ; et

- des moyens (12, 22) de mesure de la pression totale fournie par le ventilateur, du débit dans le réseau et éventuellement de la puissance électrique (Pe) absorbée par le moteur du ventilateur,

caractérisée en ce qu'elle comprend également une unité centrale de calcul (14) ayant :

- un processeur ou calculateur (20) ;

- une mémoire (26) prévue pour mémoriser sous forme numérique au moins une courbe caractéristique pression totale-débit, et éventuellement une courbe caractéristique puissance-débit du ventilateur, à au moins une vitesse prédéterminée ;

- des moyens (30) de visualisation desdites courbes ; et

- des moyens de saisie de données, permettant d'affecter une valeur de consigne ($Q_c$) au débit à faire passer dans le réseau, l'unité centrale de calcul (14) étant prévue pour calculer la résistance (R) du réseau et le débit (Q) qui la parcourt à un instant déterminé, à partir des signaux fournis par les moyens de mesure, et étant prévue pour calculer, à partir des résultats du calcul précédent et de la valeur de consigne du débit, par interpolation, la vitesse à donner au ventilateur et pour commander le convertisseur de façon à atteindre cette vitesse, éventuellement en plusieurs ajustements successifs.

3. Installation selon la revendication 2, caractérisée en ce que lesdits moyens de mesure comportent des convertisseurs analogique-numérique fournissant des échantillons numérisés à l'unité centrale.

4. Installation selon la revendication 3, caratérisée en ce que l'unité centrale (14) est prévue pour prendre en compte les valeurs moyennes de la pression totale et du débit.

5. Installation selon la revendication 2, 3 ou 4, caractérisée en ce que les moyens de mesure du débit comportent des moyens de mesure de la charge dynamique dans la conduite, à partir de laquelle l'unité centrale détermine le débit.

6. Installation selon l'une quelconque des revendications 2 à 5, caractérisée en ce qu'elle comporte des moyens de visualisation permettant de faire apparaître les courbes caractéristiques courantes en fonction du débit.

7. Installation selon l'une quelconque des revendications 2 à 6, caractérisée en ce que l'unité centrale est prévue pour effectuer une comparaison entre le débit de consigne et le débit courant et réajuster la vitesse du ventilateur à intervalles réguliers ou lorsque l'écart de débits dépasse un seuil prédéterminé.

8. Installation selon l'une quelconque des revendications 2 à 7 à plusieurs ventilateurs montés en parallèle, caractérisée en ce que l'unité centrale est prévue pour répartir également le débit de consigne et les variations de ce débit entre les ventilateurs.

**Patentansprüche**

1. Verfahren zur Regelung der Luftmenge in einem Rohrleitungsnetz, beispielsweise in einer Mine, einem Schacht oder in einem unterirdischen oder gewerblichen Bauwerk durch Steuerung der Geschwindigkeit wenigstens eines kreisenden Lüfters (10) zur Luftumwälzung, versehen mit einem Elektromotor (16), dessen Geschwindigkeit von der Frequenz eines Konverters abhängt, wobei die Frequenz durch eine Rechnerzentraleinheit steuerbar ist,
dadurch gekennzeichnet, daß
a) man in einer Rechnerzentraleinheit (14) wenigstens eine typische Kennlinie des Drucks für die Gesamtleistung für wenigstens eine vorgegebene Geschwindigkeit speichert,
b) man wenigstens den Gesamtdruck ($H_t$) mißt, der von dem Lüfter erzeugt wird, sowie die Umdrehungsgeschwindigkeit für ein funktionierendes System, wobei man hieraus rechnerisch mit Hilfe der Zentraleinheit die augenblickliche Ausströmungsmenge und den Netzwiderstand ableitet.
c) man in den Rechner die Leistungsmenge des Lüfters (10) eingibt und man daraus rechnerisch mit Hilfe der Zentraleinheit (14) den theoretischen Gesamtdruck des Lüfters (10) ableitet,
d) man durch Interpolation zwischen den gespeicherten Kennlinien und den rechnerischen Ableitungen die einzustellende Geschwindigkeit des Lüfters bestimmt und man den Konverter (18) mit Hilfe der Rechnerzentraleinheit nach der entsprechenden Frequenz reguliert.
e) man die Messungen des Gesamtdrucks und der Geschwindigkeit wiederholt, um die tatsächliche Ausströmungsmenge festzustellen und man ggf. die Frequenz der Regelung des Konverters korrigiert, um die gewünschte Ausströmungsmenge zu erhalten.

2. Vorrichtung zur Regelung der Luftmenge in einem Rohrleitungsnetz, bestehend aus:
   - wenigstens einem Lüfter (10) zur Luftumwälzung, versehen mit einem Elektromotor (16), dessen Geschwindigkeit durch die Frequenz des diesen versorgenden elektrischen Stromes gesteuert wird,
   - einem Konverter (18), der den Strom liefert, dessen Ausgangsfrequenz durch ein Steuersignal, das dem Konverter gegeben wird, regulierbar ist, und aus
   - Mitteln (12, 22) zur Messung des Gesamtdrucks, der vom Lüfter und der Ausströmungsmenge aus dem Netz und ggf. der elektrischen Leistung (Pe), die vom Lüftermotor aufgenommen wird, erzeugt wird,
   dadurch gekennzeichnet,
   daß diese gleichzeitig eine Rechnerzentraleinheit (14) enthält, bestehend aus:
   - einem Prozessor oder Rechner (20)
   - einem Speicher (26), vorgesehen zum Speichern in numerischer Form wenigstens einer typischen Kennlinie des Gesamtdrucks, und ggf. einer typischen Kennlinie der Gesamtleistung des Lüfters bei wenigstens einer vorgegebenen Geschwindigkeit;
   - Anzeigemitteln (30) zur Anzeige der Kennlinien und
   - Dateneingabemitteln, zur Eingabe des Sollwertes (Q$_c$) für die Ausströmungsmenge, die durch das Leitungsnetz durchgelassen werden soll, wobei die Rechnerzentraleinheit (14) zur Errechnung des Netzwiderstands (R) und der augenblicklichen Ausströmungsmenge (Q) und zur Verarbeitung der von den Meßeinrichtungen gelieferten Signale und zur Berechnung der Geschwindigkeit des Lüfters durch Interpolation ausgehend von den Ergebnissen der vorangegangenen Berechnungen und dem Sollwert der Ausströmungsmenge und zur Steuerung des Konverters zur Erreichung der optimalen Geschwindigkeit, ggf. mit mehreren, schrittweisen Nachjustierungen vorgesehen ist.

3. Vorrichtung gemäß Anspruch 2, dadurch gekennzeichnet, daß die genannten Meßmittel, numerisch-analoge Konverter umfassen, die numerierte Muster an die Zentraleinheit liefern.

4. Vorrichtung gemäß Anspruch 3, dadurch gekennzeichnet, daß die Zentraleinheit (14) zur Erfassung der Mittelwerte des Gesamtdrucks und der Ausströmungsmenge vorgesehen ist.

5. Vorrichtung gemäß Ansprüchen 2, 3 oder 4, dadurch gekennzeichnet, daß die Meßmittel für die Ausströmungsmenge auch Meßmittel für die dynamische Last in der Leitung umfassen, woraus die Zentraleinheit die Ausströmungsmenge bestimmt.

6. Vorrichtung gemäß einem der vorhergehenden Ansprüche 2 bis 5, dadurch gekennzeichnet, daß diese Anzeigemittel zur Visualisierung der typischen elektrischen Kennlinien der Ausströmungsmenge umfaßt.

7. Vorrichtung gemäß einem der vorhergehenden Ansprüche 2 bis 6, dadurch gekennzeichnet, daß die Zentraleinheit dafür vorgesehen ist, die Sollwerte der vorgeschriebenen Ausströmungsmenge und die Istwerte der laufenden Ausströmungsmenge zu vergleichen und die Geschwindigkeit des Lüfters in regelmäßigen Zeitabständen nachzuregeln, wenn die Ausströmungsmenge vom Ausgangswert abweicht.

8. Vorrichtung gemäß einem der vorherigen Ansprüche 2 bis 7 für mehrere, parallel geschaltete Lüfter, dadurch gekennzeichnet,

daß die Zentraleinheit dafür vorgesehen ist, auch die vorgeschriebene Ausströmungsmenge und die Schwankungen unter den Lüftern auszugleichen.

## Claims

1. A method of adjusting air flow rate in a network of ducts such as a mine, or industrial or underground works, by controlling the speed of at least one rotary fan (10) for causing air to flow, the fan being provided with an electric motor (16) whose speed is a function of the frequency delivered by an adjustable frequency converter controllable by a central calculation unit, the method being characterized in that:

a) at least one characteristic curve of total pressure as a function of flow rate at at least one predetermined speed is stored in the central calculation unit (14);

b) at least the flow velocity and the total pressure (H$_t$) supplied by the fan are measured under steady operating conditions and the flow rate at a current instant and the resistance of the network are deduced therefrom by calculation by means of the central unit;

c) the reference flow rate to be supplied by the fan (10) is input into the calculation member, and the theoretical total pressure to be supplied by the fan (10) is deduced therefrom by calculation by the central unit (14);

d) the speed to be given to the fan is determined by interpolation between the characteristic curves as stored and as deduced by calculation, and the converter (18) is set to the corresponding frequency by means of the central calculation unit; and

e) the velocity and the total pressure measurements are repeated to determine the resulting real flow rate, and the set frequency of the converter is optionally corrected to obtain the required reference flow rate.

2. An installation for adjusting the air flow rate in a network of ducts, the installation comprising:

at least one air flow fan (10) provided with an electric motor (16) whose speed is a function of the frequency of the electricity supplied thereto;

a converter (18) supplying electricity at an output frequency that is adjustable by a control signal applied to the converter; and

measuring means (12, 22) for measuring the total pressure supplied by the fan, the flow rate in the network, and optionally the electrical power (Pe) absorbed by the motor of the fan;

the installation being characterized in that it also includes a central calculation unit (14) having:

a processor or computer (20);

a memory (26) provided to store in digital form at least one characteristic curve of total pressure as a function of flow rate, and optionally a characteristic curve of power as a function of flow rate of the fan, at at least one predetermined speed;

means (30) for displaying said curves; and

data input means enabling a reference value ($Q_c$) to be set for the flow rate through the network, the central calculation unit (14) being designed to calculate the resistance (R) of the network and the flow rate (Q) passing therethrough at a given instant, on the basis of the signals provided by the measuring means, and being designed to calculate the speed to be given to the fan by interpolation on the basis of the results of the preceding calculation and of the reference value for the flow rate, and to control the converter in such a manner as to achieve said speed, possibly after a plurality of successive adjustments.

3. An installation according to claim 2, characterized in that said measuring means include analog-to-digital converters providing digitized samples to the central unit.

4. An installation according to claim 3, characterized in that the central unit (14) is designed to take account of mean values of the total pressure and of the flow rate.

5. An installation according to claim 2, 3, or 4, characterized in that the means for measuring the flow rate include means for measuring the dynamic head in the duct, on the basis of which the central unit determines the flow rate.

6. An installation according to any one of claims 2 to 5, characterized in that it includes display means for showing the current characteristic curves as a function of the flow rate.

7. An installation according to any one of claims 2 to 6, characterized in that the central unit is designed to compare the reference flow rate with the current flow rate and to readjust the speed of the fan at regular intervals or whenever the difference between the flow rates exceeds a predetermined threshold.

8. An installation according to any one of claims 2 to 7 having a plurality of fans disposed in parallel, the installation being characterized in that the central unit is designed to distribute the reference flow rate and variations in said flow rate evenly between the fans.

FIG.1.

FIG.2.

$$H_t = R_c * Q^2$$

FIG.3.

## FIG.4.

## FIG.5.

$H_t = R * Q^2$

FIG.6.

FIG.7B.

ENTREE DE LA CONSIGNE DEBIT

TRAITEMENT PAR LE PC :
DETERMINATION DE LA VITESSE EN
FONCTION DU VENTILATEUR ET DE
L'ETAT DU RESEAU

ENVOI DE LA CONSIGNE A L'AUTOMATE

VARIATION DE
LA VITESSE DU
VENTILATEUR SI
LA CONSIGNE DEBIT
N'EST PAS ATTEINTE

CONTROLE DU BON FONCTIONNEMENT
ET PILOTAGE DU VENTILATEUR, PAR
L'AUTOMATE, VIA LE CONVERTISSEUR

RETOUR DE L'INFORMATION
"VITESSE DU VENTILATEUR"
A L'AUTOMATE PUIS AU PC

ENTREE DE LA CONSIGNE DEBIT

TRAITEMENT PAR LE PC AFIN DE TRADUIRE LE DEBIT
EN FREQUENCE, EN FONCTION DE L'ETAT DU RESEAU

ENVOI DE LA FREQUENCE A L'AUTOMATE (API)

CONTROLE DU BON FONCTIONNEMENT
DU VENTILATEUR PAR L'API

ENVOI DE LA FREQUENCE AU CONVERTISSEUR

RETOUR DE LA FREQUENCE DU CONVERTISSEUR
VERS L'API

RETOUR VERS LE PC

TRAITEMENT PAR LE PC AFIN DE CALCULER
LE DEBIT REEL

NON     DEBIT REEL = DEBIT DEMANDE

OUI

ATTENTE D'UNE AUTRE CONSIGNE ET CONTROLE
DE L'INSTALLATION EN TEMPS REEL

FIG.7A.